# EUROPÄISCHE PATENTSCHRIFT

(11) **EP 0 742 052 B1**
(45) Veröffentlichungstag und Bekanntmachung des Hinweises auf die Patenterteilung: **27.02.2002**
(21) Anmeldenummer: 96107581.9
(22) Anmeldetag: 13.05.1996
(51) Int. Cl.: B05B 15/12

(54) **Spritzkabine und Verfahren zum Betreiben einer Spritzkabine**
Spray booth and its operating method
Cabine de pulvérisation et son procédé d'exploitation

(30) Priorität: 12.05.1995 DE 19517080
(43) Veröffentlichungstag der Anmeldung: 13.11.1996
(73) Patentinhaber: Wurster, Gerd, D-70191 Stuttgart (DE)
(72) Erfinder: Wurster, Gerd, D-70191 Stuttgart (DE)
(74) Vertreter: Gahlert, Stefan, Dr.-Ing.

(56) Entgegenhaltungen:
- EP-A- 0 141 171
- EP-A- 0 523 415
- DE-A- 4 234 527
- DE-U- 9 110 651

## Beschreibung

Die Erfindung betrifft eine Spritzkabine, insbesondere für wasserverdünnbare Beschichtungsstoffe, die nach Trocknung oder Teiltrocknung bei Raumtemperatur durch Wasser nicht mehr in einem weitgehend homogenen Zustand reemulgierbar sind, mit Begrenzungsflächen, die zumindest zum Teil als Rieselflächen ausgebildet sind, die durch einen aus einem Auffangbehälter gespeisten Primärkreislauf mit Waschflüssigkeit berieselbar sind, mit einem aus einem Spülbehälter gespeisten Spülkreislauf zur Spülung von Anlagenteilen mit Spülflüssigkeit, wobei mit der Waschflüssigkeit des Primärkreislaufes eine erste Waschstufe zur Reinigung der Abluft aus der Spritzkabine betrieben ist, und wobei der ersten Waschstufe eine zweite Waschstufe zur Nachbehandlung der Abluft nachgeschaltet ist.

Die Erfindung betrifft ferner ein Verfahren zum Betreiben einer Spritzkabine, insbesondere für wasserverdünnbare Beschichtungsstoffe, die nach Trocknung oder Teiltrocknung bei Raumtemperatur durch Wasser nicht mehr in einen weitgehend homogenen Zustand reemulgierbar sind, bei dem die Begrenzungsflächen der Spritzkabine während eines Spritzbetriebes der Spritzkabine zumindest teilweise mit Waschflüssigkeit aus einem Primärkreislauf berieselt werden, und bei dem Anlagenteile mit Spülflüssigkeit aus einem Spülkreislauf gespült werden, wobei mit der Waschflüssigkeit aus dem Primärkreislauf die Abluft aus der Spritzkabine in einer ersten Waschstufe gewaschen wird, und wobei die Abluft in einer zweiten Waschstufe nachbehandelt wird.

Eine derartige Spritzkabine und ein derartiges Verfahren sind aus der EP-A-0 523 415 bekannt.

Bei der bekannten Spritzkabine wird die Waschflüssigkeit der Rieselflächen in einem Lackwasserbehälter aufgefangen und im Kreislauf zur Berieselung der Wände der Spritzkabine umgepumpt. Zur Rückgewinnung des Lackmaterials wird eine Teilmenge aus dem Lackwasserbehälter in einer Eindickanlage, wie etwa eine Ultrafiltrationseinrichtung, gepumpt und das hierbei entstehende Permeat in einem Spülbehälter aufgefangen, der zur Spülung der Wasserrieselflächen benutzt wird.

Darüber hinaus weist die Spritzkabine einen Wäscher zur Reinigung der Abluft aus der Spritzkabine auf, der im Kreislauf betrieben wird und dem eine zweite Waschstufe nachgeschaltet sein kann.

Als problematisch bei einer derartigen Spritzkabine, die mit wasserlöslichem Lack, sogenanntem Wasserlack, betrieben werden kann, hat es sich erwiesen, daß in den Stillstandszeiten, in denen die Wasserberieselung abgeschaltet ist, Wasserlack an exponierten Anlagenteilen antrocknet, der auch bei einer später wieder einsetzenden Berieselung nicht mehr gelöst werden kann.

Bei einer weiteren aus der DE-A-4 310 331 bekannten Spritzkabine wird als Berieselungsmedium zur Berieselung der Rieselflächen der wasserlösliche Beschichtungsstoff selbst genutzt. Das Kreislaufsystem für das Berieselungsmedium, d.h. der Primärkreislauf, wird in bestimmten zeitlichen Abständen mittels Spülwasser aus einem Spülwasservorrat gespült, wobei dem Spülwasservorrat ein dem Verdunstungsanteil des Berieselungsmediums entsprechender Anteil entnommen und diesem zugeführt und dem Spülwasser ein entsprechender Anteil von Frischwasser zugegeben wird.

Als nachteilig hat sich bei der bekannten Spritzkabine erwiesen, daß infolge der Verwendung des Beschichtungsmediums selbst zur Beflutung der Rieselflächen sich während des Betriebes im Laufe der Zeit Ablagerungen an den Anlagenteilen ergeben, die auch durch die in zeitlichen Abständen erfolgende Spülung nicht mehr beseitigt werden können.

Ähnliches gilt für das Recyclingverfahren der Waschflüssigkeit gemäß I-Lack 2/94 "Das Lack-im-Lack-System", Seiten 47-49, wobei wiederum als Waschflüssigkeit bereits verdünnter Lack verwendet wird.

Gleichwohl, ob es sich um einen herkömmlichen, lösemittelhaltigen Lack oder um Wasserlack handelt, ist ein Recycling grundsätzlich nur dann möglich, wenn der verwendete Lack nach einer Teiltrocknung wieder in einen gelösten oder homogenen feindispersen Zustand überführbar ist.

Neigt der Lack dagegen bereits bei Raumtemperatur zum Verfilmen, das heißt zur Bildung eines nicht mehr oder nur noch mit speziellen Lösungsmitteln löslichen bzw. in einen homogenen feindispersen Zustand überführbaren Filmes, so ist ein Recycling grundsätzlich erschwert.

Der Grund dafür liegt darin, daß bei derartigen Beschichtungsstoffen außerordentlich große Probleme durch das Ansetzen von Beschichtungsstoff an verschiedenen Teilen der Spritzkabine, an einzelnen Anlagenteilen, an Düsen, Wandungen, Ventilen und sonstigen Einrichtungen der Spritzkabine bestehen. Dadurch setzen sich bei jedem Stillstand der Spritzkabine weitere Farbreste insbesondere an exponierten Anlagenteilen, wie an Flächen und dergleichen, ab. Im Laufe der Zeit führt dies zu einem Aufbau von Farbschichten erheblicher Stärke, die nach einer gewissen Betriebszeit nur noch durch mechanische Hilfsmittel entfernt werden können, die also praktisch abgeschabt bzw. abgeschlagen oder entlackt werden müssen.

Dadurch wird der Betrieb der Spritzkabine erheblich erschwert und ein Recycling von Beschichtungsstoffen nahezu unmöglich gemacht, da durch Vibrationen, mechanischen Abrieb und insbesondere nach einer mechanischen Reinigung noch Reststücke angetrockneten bzw. ausgehärteten Beschichtungsstoffes, sowie Knoten, Stippen und weitere Rückstände in die Waschflüssigkeit (Spritzkabinenumlaufwasser) gelangen.

Ferner bestehen auch bei Verwendung von Beschichtungsstoff, der nicht zur Filmbildung neigt, erhebliche Probleme bei einem Farbwechsel durch eine meist unvollkommene Reinigung.

Die Aufgabe der Erfindung besteht demnach darin, eine Spritzkabine und ein Verfahren zum Betreiben einer Spritzkabine zu schaffen, womit ein möglichst reibungsloser Betrieb der Spritzkabine auch bei wasserverdünnbaren Beschichtungsstoffen ermöglicht ist, die nach Trocknung oder Teiltrocknung bei Raumtemperatur durch Wasser nicht mehr zu einem weitgehend homogenen Beschichtungsstoff reemulgierbar sind. Dabei sollen ferner durch Reinigungsarbeiten bedingte Stillstandszeiten reduziert werden und darüber hinaus ein Recycling des durch die Waschflüssigkeit aufgefangenen Oversprays erleichtert werden. Auch soll ein Farbwechsel erleichtert werden.

Diese Aufgabe wird bei einer Spritzkabine der eingangs genannten Art dadurch gelöst, daß die zweite Waschstufe aus dem Spülkreislauf gespeist ist, und daß eine Steuereinrichtung vorgesehen ist, die mit dem Primärkreislauf und dem Spülkreislauf zu deren Steuerung gekoppelt ist, und die zur Umschaltung zwischen einem Spritzbetrieb der Spritzkabine, in dem die erste Waschstufe aus dem Primärkreislauf gespeist ist, und einem Spülbetrieb der Spritzkabine ausgebildet ist, und die zur Zuführung von Spülflüssigkeit aus dem Spülbehälter zumindest zur ersten Waschstufe oder den Rieselflächen bei Umschaltung vom Spritzbetrieb in den Spülbetrieb ausgebildet ist.

Diese Aufgabe wird ferner bei einem Verfahren gemäß der eingangs genannten Art dadurch gelöst, daß die zweite Waschstufe mit Spülflüssigkeit aus dem Spülkreislauf betrieben wird, und daß bei Abschaltung oder Unterbrechung des Spritzbetriebes die Spülflüssigkeit aus dem Spülkreislauf zumindest in die erste Waschstufe der Spritzkabine umgeleitet wird.

Die Aufgabe der Erfindung wird auf diese Weise vollständig gelöst, da erfindungsgemäß eine Ablagerung von Farbresten an Anlagenteilen und eine Bildung von teilgetrockneten oder vollständig getrockneten Farbresten in der Waschflüssigkeit des Primärkreislaufes auch bei Stillstand der Spritzkabine, also außerhalb des Spritzbetriebes, weitgehend vermieden wird. Dies wird erfindungsgemäß auf überraschend einfache Weise dadurch erreicht, daß vorzugsweise kurz nach der Abschaltung des Primärkreislaufes mittels Spülflüssigkeit aus einem Spülbehälter eine Spülung wesentlicher Anlagenteile erfolgt, so daß ein Antrocknen von Beschichtungsstoff weitgehend verhindert wird.

Während sich die Waschflüssigkeit des Primärkreislaufes während des Spritzbetriebes ständig in ihrer Festkörperkonzentration anreichert, weist die Spülflüssigkeit erheblich geringere Festkörperkonzentrationen auf, da diese nicht zur direkten Aufnahme von Overspray vorgesehen ist, sondern lediglich ein Antrocknen von Beschichtungsstoff verhindern soll. Um eine möglichst große Reinigungswirkung zu erzielen, kann als Spülflüssigkeit beispielsweise voll entsalztes Wasser verwendet werden. Gegebenenfalls kann die Spülflüssigkeit auch mit speziellen Waschzusätzen, wie Aminen, angereichert werden. Der Wascheffekt wird verstärkt, wenn der pH-Wert derart eingestellt wird, wie es bei dem Beschichtungsstoff im Verarbeitungszustand vorteilhaft ist. Dies kann bei aminhaltigen Wasserlacken im pH-Bereich zwischen etwa 8,5 - 9,0 liegen.

Erfindungsgemäß wird vorgeschlagen, daß bei Umschaltung von Spritzbetrieb auf Spülbetrieb (also bei Abschaltung der Spritzkabine) der Spülkreislauf zur Befeuchtung von besonders gefährdeten Anlagenteilen verwendet wird. Der Primärkreislauf wird also abgeschaltet, während die Spülflüssigkeit aus dem Spülkreislauf, die eine erheblich bessere Reinigungswirkung als die Flüssigkeit aus dem Primärkreislauf hat, zur Befeuchtung bzw. Beflutung der gefährdeten Anlagenteile verwendet wird, um ein Antrocknen von Beschichtungsstoff zu vermeiden bzw. um die Anlage zu reinigen. Dabei kann gegebenenfalls der Spülkreislauf aus der zweiten Waschstufe in die Spritzkabine derart umgelenkt werden, daß die zweite Waschstufe nicht mehr mit Spülflüssigkeit befeuchtet wird und daß stattdessen die Rieselflächen der Spritzkabine bzw. die exponierten Anlagenteile der Spritzkabine mit Spülflüssigkeit befeuchtet werden. Dies ist möglich, da die Spülflüssigkeit eine erheblich bessere Reinigungswirkung als die Waschflüssigkeit des Primärkreislaufes besitzt und da sich in der zweiten Wachstufe erheblich weniger Beschichtungsstoff ablagert. Es kann allerdings auch sinnvoll sein, zusätzlich auch die zweite Waschstufe weiter mit Spülflüssigkeit im Kreislauf zu betreiben, um auch hier ein Antrocknen von Farbresten sicher zu vermeiden. So wird insgesamt eine erheblich verbesserte Reinigung erzielt, wodurch ein Farbwechsel erleichtert wird bzw. die Stillstandszeit bei einem Farbwechsel verkürzt wird, was erhebliche Kosteneinsparungen bedeutet.

Es versteht sich, daß die Menge der Spülflüssigkeit im reinen Spülbetrieb bei Stillstand der Spritzkabine teilweise erheblich niedriger sein kann als die Menge der Waschflüssigkeit während des Spritzbetriebes, da ja lediglich ein Antrocknen von Beschichtungsstoff verhindert werden soll, jedoch ein unmittelbares Auffangen von Overspray nicht erforderlich ist.

In der erfindungsgemäßen Spritzkabine können grundsätzlich wasserverdünnbare Beschichtungsstoffe aller Art verarbeitet werden. Besondere Vorteile birgt die erfindungsgemäße Spritzkabine jedoch insbesondere dann, wenn Lacke oder sonstige Beschichtungsstoffe verwendet werden, die bei Raumtemperatur zur Verfilmung neigen, das heißt einen in Wasser nicht löslichen Film bilden und schon nach Teiltrocknung nicht mehr in gelösten oder homogenen feindispersen Zustand überführbar sind. Zu derartigen Beschichtungsstoffen oder Anstrichstoffen gehören beispielsweise wasserverdünnbare Füller für die Kfz-Lackierung und lufttrocknende Wasserlacke, die zum Beispiel in der Phonoindustrie für Radio-/Fernsehgehäuse verwendet werden. Es versteht sich, daß darüber hinaus noch zahlreiche andere Lacke oder Anstrichstoffe im weiteren Sinne unter dem Begriff "Beschichtungsstoff" zu verstehen sind, die besonders vorteilhaft in der erfindungsgemäßen Spritzkabine verarbeitet werden können.

Ein weiterer Vorteil der erfindungsgemäßen Vorrichtung und des erfindungsgemäßen Verfahrens besteht darin, daß durch die unmittelbar einsetzende Spülung exponierter Anlagenteile bei Beendigung des Spritzbetriebes ein Farbwechsel erheblich vereinfacht wird, da ein Ansetzen von Beschichtungsstoff von vornherein vermieden wird und eine verbesserte Reinigung der Anlage erreicht wird.

Es versteht sich, daß die Erfindung nicht auf die Anwendung bei einer geschlossenen Spritzkabine beschränkt ist, sondern gleichermaßen vorteilhaft auch bei einer teilweise offenen Spritzkabine verwendet werden kann, die in der Regel als Spritzstand bezeichnet wird (vergleiche zum Beispiel US 2 788 954).

Gemäß einer Weiterbildung der Erfindung umfaßt der Spülkreislauf der Spritzkabine einen Teilkreislauf mit Spül-, Nebel- oder Sprüheinrichtungen, mittels derer während des Spritzbetriebes der Spritzkabine Anlagenteile zusätzlich mit Waschflüssigkeit befeuchtet werden, um ein Antrocknen von Beschichtungsstoff zu vermeiden.

Da antrocknende Beschichtungsstoffe selbst noch bei relativ hoher Luftfeuchtigkeit dazu neigen, sich an Anlagenteilen abzusetzen, besteht auch während des Betriebes der Spritzkabine, bei dem die Rieselflächen der Spritzkabine mit Waschflüssigkeit berieselt werden, die Gefahr des Antrocknens von Beschichtungsstoff auf anderen Anlagenteilen, insbesondere in den sogenannten Ansaugschächten und den Kanalsystemen, die nicht direkt mit Waschflüssigkeit beaufschlagt werden. Gemäß der Weiterbildung der Erfindung werden daher besonders exponierte Anlagenteile zusätzlich mit Spülflüssigkeit befeuchtet, um so sämtliche Anlagenteile der Spritzkabine möglichst frei von antrocknendem Beschichtungsstoff zu halten. Dies kann auch impulsartig geschehen, was teilweise den Reinigungseffekt verbessert.

Wird eine solche Spül-, Nebel- oder Sprüheinrichtung in der Wascheinrichtung der Spritzkabine vorgesehen, so wird gleichzeitig eine verbesserte Abluftreinigung erreicht.

In zusätzlicher Weiterbildung der Erfindung ist im Auffangbehälter des Primärkreislaufes eine Spül-, Nebel- oder Sprüheinrichtung vorgesehen, um ein Antrocknen von Beschichtungsstoff im oberen Bereich des Auffangbehälters zu vermeiden.

Vorzugsweise wird eine derartige Spül-, Nebel- oder Sprüheinrichtung über einen Sensor, vorzugsweise einen Feuchtesensor oder einen Niveausensor, gesteuert. Auch kann eine Zeitsteuerung verwendet werden, die in geeigneter Weise programmiert wird.

Im Auffangbehälter des Primärkreislaufes sammelt sich die Waschflüssigkeit, deren Festkörpergehalt im Laufe der Zeit während des Betriebes der Spritzkabine mehr und mehr zunimmt. Sinkt nun beispielsweise das Niveau der Flüssigkeit im Auffangbehälter ab, so führt dies normalerweise sofort zu einem Antrocknen von Beschichtungsstoff an den Wänden des Behälters. Gemäß den Vorschlägen der Erfindung wird dies dadurch vermieden, daß die Spül-, Nebel- oder Sprüheinrichtung sensorbetätigt in Gang gesetzt wird, beispielsweise sobald die relative Feuchte im Auffangbehälter unter 95 % absinkt oder sobald ein bestimmtes Niveau des Flüssigkeitsspiegels im Behälter unterschritten wird.

Gemäß einer weiteren Ausgestaltung der Erfindung ist in der Waschstufe eine Spül- oder Sprüheinrichtung zur Befeuchtung mit Spülflüssigkeit beim Spritzbetrieb vorgesehen.

Es ist bei herkömmlichen Spritzkabinen allgemein gebräuchlich, zur Behandlung der Abluft aus der Spritzkabine eine Waschstufe vorzusehen, die in der Regel aus dem Primärkreislauf gespeist wird, um so über entsprechende Düsen mittels der Waschflüssigkeit des Primärkreislaufes eine Abluftwäsche während des Betriebes der Spritzkabine zu erreichen. Gemäß der Weiterbildung der Erfindung ist in der Waschstufe nunmehr zusätzlich eine Spül- oder Sprüheinrichtung zur Befeuchtung mit Spülflüssigkeit auch während des Spritzbetriebes vorgesehen. Dadurch können auch in der Waschstufe gefährdete Anlagenteile besonders mit Spülflüssigkeit beaufschlagt werden, um ein Antrocknen von Beschichtungsstoff zu vermeiden.

In zusätzlicher Ausgestaltung der Erfindung weist die Steuereinrichtung eine Zeitsteuerung zur Abschaltung des Spülkreislaufes nach einer bestimmten Zeitspanne oder zur intermittierenden Ein-/Ausschaltung des Spülkreislaufes auf. Alternativ kann auch eine Einrichtung zur Herabsetzung der Pumpleistung vorgesehen sein.

Es versteht sich, daß bei längerem Stillstand der Spritzkabine kein ständiges Betreiben des Spülkreislaufes erforderlich ist. Es reicht vielmehr aus, den Spülvorgang eine gewisse Zeit nach Beendigung des Spritzbetriebes weiterzuführen und gegebenenfalls von Zeit zu Zeit wieder kurzzeitig aufzunehmen. Dies bedeutet eine entsprechende Energie- und Kostenersparnis. So ist es beispielsweise denkbar, daß eine Spritzkabine außerhalb der Betriebszeiten, zum Beispiel über Nacht, lediglich alle fünf oder zehn Minuten kurzfristig gespült wird, um ein Antrocknen von Beschichtungsstoff auch bei geringen Festkörpermengen zu vermeiden. Alternativ kann der Spülkreislauf mit geringer Pumpleistung betrieben werden.

Die Waschflüssigkeit aus dem Primärkreislauf wird gemäß einem weiteren Vorschlag der Erfindung von Zeit zu Zeit aus dem Primärkreislauf teilweise abgezogen, aufkonzentriert und einer Wiederverwendung zugeführt.

Diese an sich bekannte Möglichkeit wird bei wasserverdünnbaren Beschichtungsstoffen, die nach Trocknung oder Teiltrocknung bei Raumtemperatur durch Wasser oder Waschwasser, das im wesentlichen Wasser enthält, nicht mehr zu einem homogenen, feindispersen Zustand reemulgierbar sind, erfindungsgemäß erst dadurch ermöglicht, daß durch die zuvor beschriebenen Spülmaßnahmen ein Antrocknen von Beschichtungsstoff sowie die Bildung von größeren Farbstoffpartikeln, von Knoten, Stippen und dergleichen in der Waschflüssigkeit weitgehend vermieden wird.

Es versteht sich, daß unter dem Begriff Waschstufe beliebige Arten von Wäschern verstanden werden können, also beispielsweise Venturi-Wäscher, Tropfenabscheider, Kaskadenwäscher, Mehrfachkaskadenwäscher, Düsenwäscher, die gegebenenfalls zusätzlich durch Filtermatten ergänzt sein können.

In vorteilhafter Weiterbildung der Erfindung kann die erfindungsgemäße Spritzkabine auch eine Membranfiltration umfassen, die aus dem Auffangbehälter des Primärkreislaufes gespeist ist, wobei das Retentat in den Auffangbehälter zurückgeführt ist und das Permeat vorzugsweise dem Spülbehälter zugeführt ist.

Dadurch läßt sich eine Aufkonzentration der Waschflüssigkeit des Primärkreislaufes erreichen, sowie gleichzeitig eine Reinigung der Spülflüssigkeit. Eine derartige Anordnung ist insbesondere bei größeren Anlagen von Vorteil, in denen größere Flüssigkeitsmengen umlaufen. So kann von Zeit zu Zeit, insbesondere bei Stillstand der Spritzkabine, eine stärkere Aufkonzentrierung der Flüssigkeit im Auffangbehälter durchgeführt werden, um diese anschließend bei ausreichender Festkörperkonzentration unmittelbar als Recyclingprodukt wiederverwenden zu können. Gleichzeitig kann die Spülung exponierter Anlagenteile aus dem Spülbehälter durchgeführt werden.

Die Membranfiltration kann dabei als Ultrafiltration, als Mikrofiltration oder auch als Umkehrosmoseeinrichtung ausgeführt sein.

Gemäß einer Weiterbildung der zuvor genannten Ausführung der Erfindung wird aus dem Spülbehälter, dem ständig aus der Membranfiltration neues Permeat zugeführt wird, mittels eines Überlaufes überschüssige Flüssigkeit in den Auffangbehälter des Primärkreislaufes zurückgeführt. Es ergibt sich somit praktisch eine Kaskadenschaltung zwischen dem Spülbehälter und dem Auffangbehälter, wodurch einerseits ständig frisch gereinigte Spülflüssigkeit für Spülzwecke im Spülbehälter zur Verfügung steht und andererseits die Flüssigkeitspegel sowohl im Spülbehälter als auch im Auffangbehälter weitgehend konstant gehalten werden, so daß die durch eine Niveauveränderung im Auffangbehälter bedingte Gefahr des Ansetzens von Beschichtungsstoff an der Behälterwand deutlich verringert wird.

Es versteht sich ferner, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele. Es zeigen:
- Fig. 1: eine erste Ausführung einer erfindungsgemäßen Spritzkabine in schematischer Darstellung;
- Fig. 2: eine Abwandlung der Spritzkabine gemäß Fig. 1;
- Fig. 3: eine weitere Ausführung einer erfindungsgemäßen Spritzkabine mit zwei Waschstufen und
- Fig. 4: eine nochmalige Abwandlung der erfindungsgemäßen Spritzkabine.

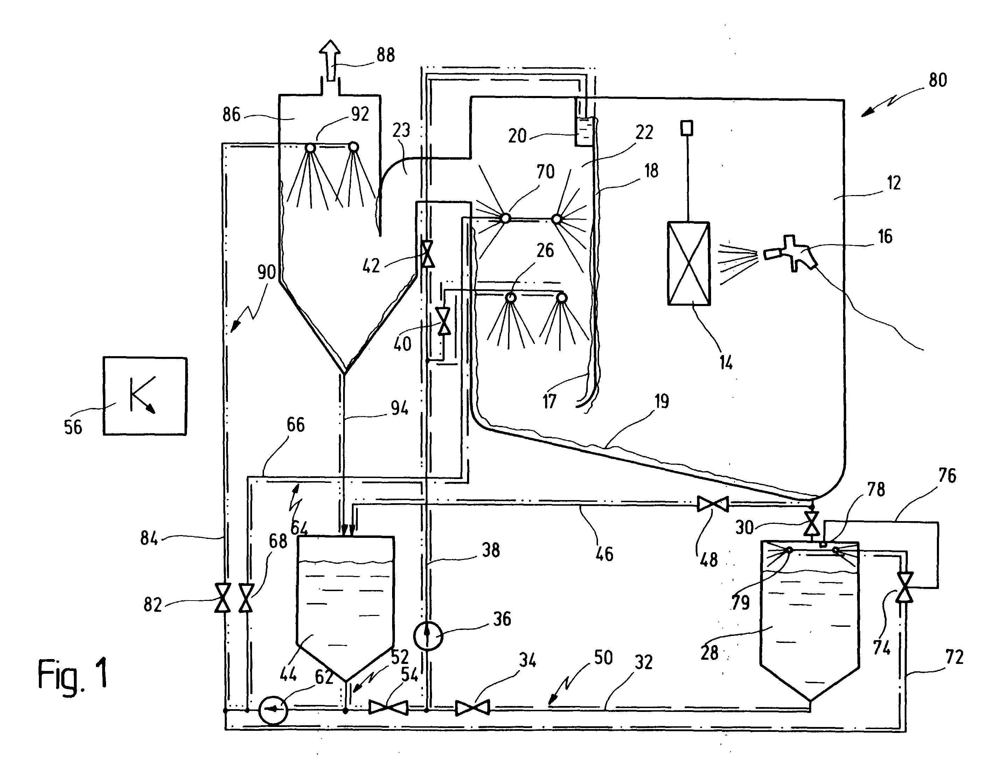

In Fig. 1 ist eine erfindungsgemäße Spritzkabine insgesamt mit der Ziffer 10 bezeichnet.

Die Spritzkabine 10 umfaßt einen Spritzraum 12, innerhalb dessen Werkstücke 14 beispielsweise mit einer Spritzpistole 16 lackiert werden. Die Wände der Spritzkabine sind als Rieselflächen ausgebildet, um ein Ansetzen von Overspray an den Wänden zu vermeiden. Dies ist beispielhaft durch eine Rieselfläche 18 an der Rückwand der Spritzkabine dargestellt, die mit Waschflüssigkeit aus einem kleinen Reservoir 20 während des Spritzbetriebes berieselt wird. Die Abluft der Spritzkabine wird von unten her abgesaugt und gelangt mit Unterstützung eines Abluftventilators zu einer nachgeordneten Waschstufe 22, in der die Abluft durch Waschdüsen 26 gereinigt wird.

Auch von den Wänden der Waschstufe 22 gelangt wiederum Waschflüssigkeit in den Behandlungsraum 12, wie dies schematisch durch die Rieselflächen 17, 19 innerhalb der Waschstufe 22 angedeutet ist.

Während des Betriebes der Spritzkabine 10 werden die Rieselflächen 17, 18, 19 und die Waschdüsen 26 aus einem Primärkreislauf ständig mit Waschflüssigkeit beaufschlagt, die im Kreislauf geführt ist. Der Primärkreislauf ist schematisch durch die gestrichelte Linie 50 angedeutet. Die Waschflüssigkeit gelangt zunächst vom tiefsten Punkt des Behandlungsraums 12 über ein Ventil 30 in einen Auffangbehälter 28. Vom Auffangbehälter 28 gelangt die Waschflüssigkeit über eine Leitung 32 und ein Ventil 34 zu einer Pumpe 36, mit Hilfe derer sie über eine Leitung 38 und ein Ventil 42 zum einen zu dem Reservoir 20 zur Beflutung der Rieselfläche 18 innerhalb des Behandlungsraums 12 gelangt, und zum anderen über ein Ventil 40 zu den Waschdüsen 26 innerhalb der Waschstufe 22.

Zusätzlich zu dem Primärkreislauf 50 ist ein Spülkreislauf vorgesehen, der durch die doppelt strichpunktierte Linie 52 dargestellt ist. Der Spülkreislauf 52 umfaßt einen Spülbehälter oder Auffangbehälter 44, der über ein Ventil 48 und eine Leitung 46 mit Flüssigkeit aus dem Auffangbehälter 28 versorgt wird und aus dem über ein Ventil 54 der Pumpe 36 Flüssigkeit zugeführt werden kann. Die einzelnen Ventile und die Pumpe stehen mit einer zentralen Steuereinrichtung in Verbindung, die schematisch mit der Ziffer 56 angedeutet ist.

Die erste Waschstufe 22 ist über einen Abluftkanal 23 mit einer zweiten Waschstufe 86 verbunden.

In der zweiten Waschstufe 86 erfolgt eine Nachbehandlung der zuvor in der ersten Waschstufe 22 vorgereinigten Abluft, und zwar im Kreislaufbetrieb mittels des vom Primärkreislauf 50 getrennten Spülkreislaufes 52 während des Betriebes der Spritzkabine 80. Der Spülkreislauf 52 umfaßt den Auffangbehälter 44, aus dem ein Teilkreislauf 90 (dreifachstrichpunktierte Linie) gespeist wird, um während des Betriebes der Spritzkabine 80 Waschdüsen 92 in der zweiten Waschstufe 86 mit Spülflüssigkeit zu versorgen. Hierzu wird Spülflüssigkeit aus dem Auffangbehälter 44 über eine Pumpe 62, ein Ventil 82 und eine Leitung 84 den Waschdüsen 92 zugeführt. Aus der zweiten Waschstufe 86 gelangt die Spülflüssigkeit wieder in den Auffangbehälter 44, so daß ein geschlossener Spülkreislauf auch während des Betriebes der Spritzkabine besteht.

Zusätzlich kann der Spülkreislauf 52 einen weiteren Teilkreislauf 64 aufweisen, der durch eine einfache strichpunktierte Linie angedeutet ist.

Über den zweiten Teilkreislauf 64 wird zum einen von der Pumpe 62 über das Ventil 68 und die Leitung 66 die Spüleinrichtung 70 in der ersten Waschstufe 22 versorgt, sowie zum anderen über die Pumpe 62, die Leitung 72 und das Ventil 74 die Sprüheinrichtung im oberen Bereich des Auffangbehälters 28 des Primärkreislaufes 50, wozu das Ventil 74 über einen Feuchtesensor 78 gesteuert wird, mittels dessen eine Sprüh- oder Nebeleinrichtung 79 im oberen Bereich des Auffangbehälters 28 gesteuert wird, der über eine Steuerleitung mit dem Ventil 74 verbunden ist, um so bei Absinken der Luftfeuchtigkeit im Auffangbehälter 28 unter einen vorgegebenen Wert von z.B. 95 % ein Antrocknen von Beschichtungsstoff an den Behälterwänden zu vermeiden. Durch die Spüleinrichtung 70 in der ersten Waschstufe 22 wird eine verbesserte Abluftreinigung erreicht.

Während des Spritzbetriebes der Spritzkabine 80 werden also zwei Kreisläufe betrieben, nämlich der Primärkreislauf 50 mit dem Auffangbehälter 28, aus dem über die Pumpe 36 das Reservoir 20 für die Rieselfläche 18 und die Waschdüsen 26 der ersten Waschstufe 22 gespeist werden, sowie der Spülkreislauf 52, über dessen Teilkreislauf 90 die Waschdüsen 92 des Wäschers der zweiten Waschstufe 86 gespeist werden.

Vorzugsweise werden zusätzlich über den Teilkreislauf 64 des Spülkreislaufes 52 besonders exponierte Anlagenteile in der ersten Waschstufe 22 oder auch im Behandlungsraum 12 mittels der Sprüheinrichtung 70 mit Spülflüssigkeit besprüht, um ein Antrocknen von Beschichtungsstoff zu vermeiden. Ferner wird bei einem Absinken des Flüssigkeitsspiegels im Auffangbehälter 28 des Primärkreislaufes 50 oder bei einem Absinken der Feuchtigkeit im Behälterraum oberhalb des Flüssigkeitsspiegels die Sprüheinrichtung 79 betätigt, um ein Ansetzen von Beschichtungsstoff auch in diesem Bereich zu vermeiden.

Es versteht sich, daß die Mengen an Spülflüssigkeit, die entweder über die Leitung 66 der Sprüheinrichtung 70 oder über die Leitung 72 der Sprüheinrichtung 79 zugeführt werden, erheblich kleiner sind als die Menge der Waschflüssigkeit, die ohnehin im Primärkreislauf 50 während des Spritzbetriebes zirkuliert. Daher können diese geringfügigen Flüssigkeitsmengen ohne weiteres in Kauf genommen werden, um einerseits einen störungsfreien Betrieb der Spritzkabine 80 sicherzustellen und um andererseits ein Recycling von Overspray auch bei Beschichtungsstoffen zu ermöglichen, die nach Trocknung oder Teiltrocknung nicht mehr in einen gelösten Zustand oder in einen homogenen, feindispersen Zustand überführbar sind.

Die Abluft wird zunächst in der ersten Waschstufe 22 vorgereinigt und gelangt dann über den Abluftkanal 23 in die zweite Waschstufe 86, in der mittels der Waschdüsen 92 eine intensive Nachreinigung erfolgt, bevor die Abluft mit Ventilatorunterstützung an die Umgebung abgegeben wird, wie durch den Pfeil 88 angedeutet ist.

Wird in der Spritzkabine 80 der Spritzbetrieb eingestellt, so wird der Primärkreislauf 50 abgeschaltet und gleichzeitig der Spülkreislauf 52 über das Ventil 54 zur Pumpe 36 umgeleitet, wobei gleichzeitig das Ventil 30 geschlossen wird, das den Ablauf des Behandlungsraums 12 mit dem Auffangbehälter 28 des Primärkreislaufes 50 verbindet.

Die Spülflüssigkeit gelangt nun aus dem Spülbehälter 44 des Spülkreislaufes 52 und das Ventil 54 und die Pumpe 36 in der zuvor bereits beschriebenen Weise über die Leitung 38 und das Ventil 40 zu den Waschdüsen 26 der ersten Waschstufe 22, sowie über das Ventil 42 zu dem Reservoir 20, aus dem die Rieselfläche 18 im Behandlungsraum 12 der Spritzkabine gespeist wird.

Zusätzlich können weiterhin die Teilkreisläufe 64 für die erste Waschstufe 22 und 90 für die zweite Waschstufe 86 betrieben werden, sofern dies erforderlich ist, um ein Antrocknen von Beschichtungsstoff an den exponierten Anlagenteilen zu vermeiden.

Wie zuvor bereits erwähnt, wird bei längerem Stillstand der Spritzkabine, zum Beispiel über Nacht, vorzugsweise eine zeitgesteuerte Abschaltung des Spülkreislaufes, oder ein Betrieb mit geringerer Pumpleistung, eine intermittierende Betriebsweise des Spülkreislaufes über die Steuereinrichtung 56 sichergestellt.

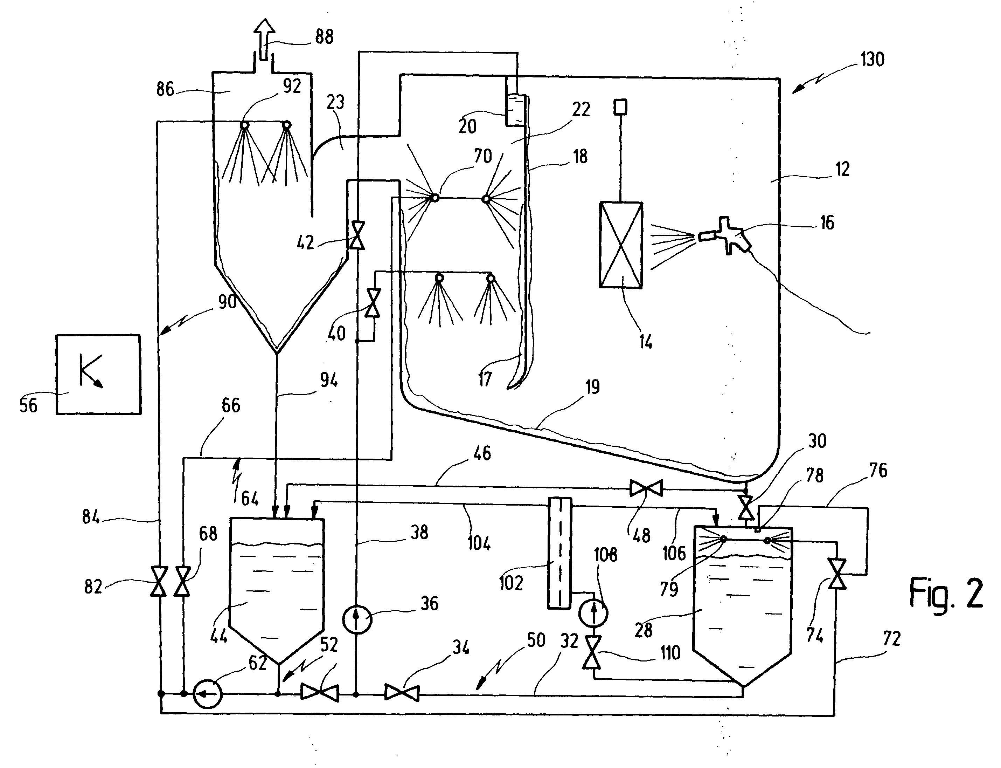

Sind größere Wassermengen für den Spülkreis erforderlich, so kann zusätzlich eine Membranfiltrationseinrichtung vorgesehen sein, wie dies nachfolgend anhand der Figur 2 erläutert ist.

Bei den Figuren nachfolgenden wurde auf die Darstellung des Primärkreislaufes, des Sekundärkreislaufes und der zugehörigen Teilkreisläufe aus Gründen der Übersichtlichkeit verzichtet, da diese Kreisläufe den zuvor beschriebenen Kreisläufen entsprechen.

Eine weitere Spritzkabine, die um eine Membranfiltrationseinrichtung ergänzt wurde, ist in Fig. 2 dargestellt und insgesamt mit der Ziffer 130 bezeichnet.

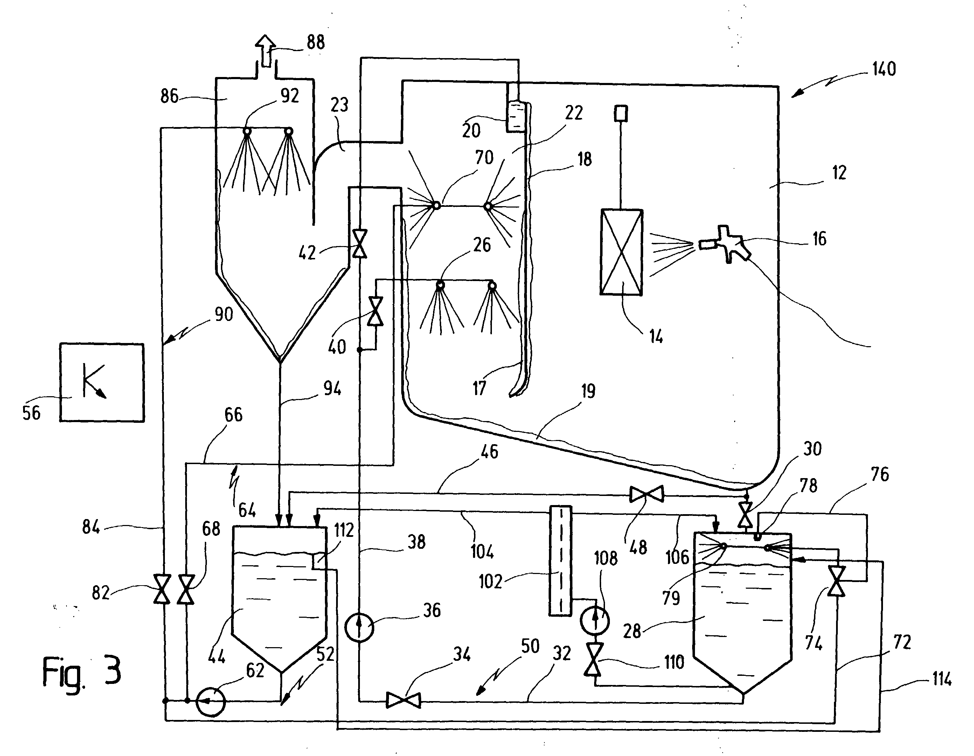

Diese Ausführung entspricht der zuvor anhand von Fig. 3 beschriebenen Ausführung, die lediglich um die Membranfiltrationseinrichtung 102 ergänzt wurde.

Hierbei werden für entsprechende Teile gleich Bezugsziffern wie zuvor verwendet.

Die Membranfiltrationseinrichtung 102 wird im Kreislauf aus dem Auffangbehälter 28 über das Ventil 110 und die Pumpe 108 gespeist, wobei das Retenat über die Leitung 106 in den Auffangbehälter 28 zurückgeführt wird und das Permeat über die Leitung 104 in den Spülbehälter 44 gelangt.

Mit einer derartigen Ausführung läßt sich eine besonders gute Reinigungswirkung durch die Spülflüssigkeit erzielen und gleichzeitig eine saubere Abluftreinigung. Ferner kann die Membranfiltrationseinrichtung 102 von Zeit zu Zeit zur Aufkonzentration in der Waschflüssigkeit aus dem Auffangbehälter 28 verwendet werden, um eine Recyclingfarbe zu erzeugen.

Eine weitere Ausführung einer erfindungsgemäßen Spritzkabine ist in Fig. 3 dargestellt und insgesamt mit 140 bezeichnet.

Diese Ausführung entspricht im wesentlichen der zuvor anhand von Fig. 2 beschriebenen Ausführung mit dem einen Unterschied, daß der Spülbehälter 44 einen Überlauf 112 aufweist, mittels dessen überschüssige Flüssigkeit über eine Leitung 114 in den Auffangbehälter 28 des Primärkreislaufes zurückgeführt ist. Es ergibt sich somit praktisch eine Kaskadenschaltung zwischen Spülbehälter 44 und Auffangbehälter 28.

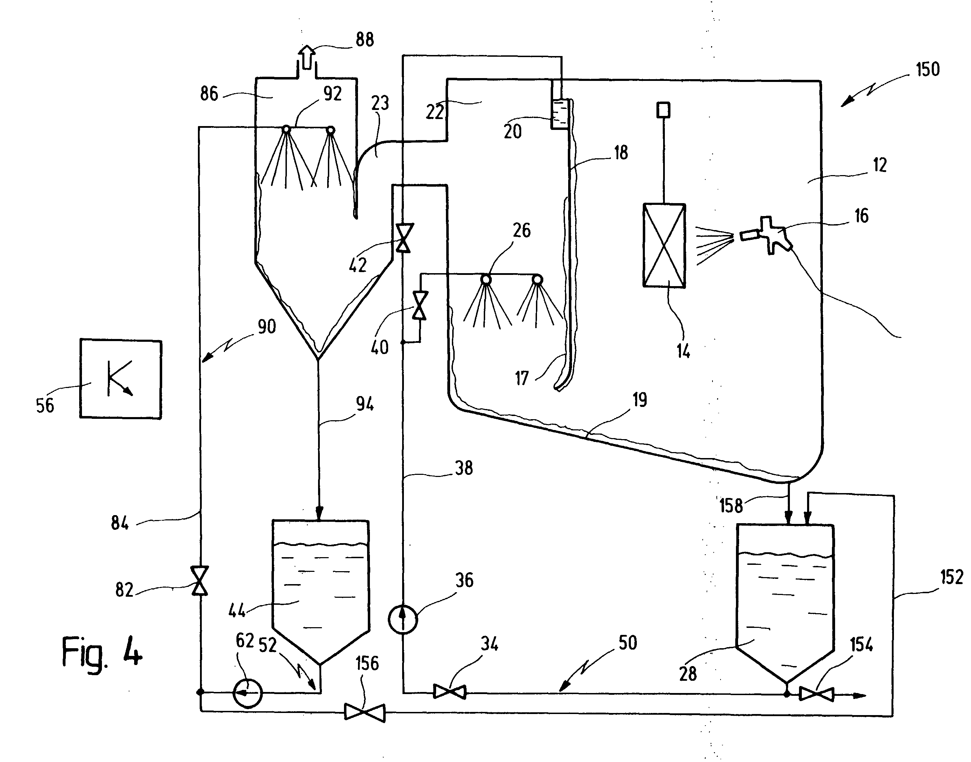

Eine weitere Ausführung einer erfindungsgemäßen Spritzkabine ist in Fig. 4 dargestellt und insgesamt mit der Ziffer 150 bezeichnet. Diese Ausführung entspricht im wesentlichen der zuvor anhand von Fig. 1 beschriebenen Ausführung, wobei jedoch auf eine unmittelbare Kopplung der ersten Waschstufe 22 mit dem Spülkreislauf 52 verzichtet wurde.

Wird die Spritzkabine 150 abgeschaltet und somit von Spritzbetrieb auf Spülbetrieb umgestellt, so wird die Waschflüssigkeit aus dem Auffangbehälter 28 mittels eines Ventils 154 schnell entleert und sofort durch Spülflüssigkeit aus dem Spülbehälter 44 wieder aufgefüllt, die über die Pumpe 62, ein Ventil 156 und eine Leitung 152 zugeführt wird, so daß anschließend aus dem Auffangbehälter 28 aufgefrischte Waschflüssigkeit zur Befeuchtung bzw. zur Reinigung der ersten Waschstufe 22 und anderer Anlagenteile verwendet werden kann. Dabei ist der Auslauf der Spritzkabine 150 unmittelbar über eine Leitung 158 mit dem Auffangbehälter 28 verbunden.

## Patentansprüche

1. Spritzkabine, insbesondere für wasserverdünnbare Beschichtungsstoffe, die nach Trocknung oder Teiltrocknung bei Raumtemperatur durch Wasser nicht mehr in einen weitgehend homogenen Zustand reemulgierbar sind, mit Begrenzungsflächen, die zumindest zum Teil als Rieselflächen (17, 18, 19) ausgebildet sind, die durch einen aus einem Auffangbehälter (28) gespeisten Primärkreislauf (50) mit Waschflüssigkeit berieselbar sind, mit einem aus einem Spülbehälter (44) gespeisten Spülkreislauf (52) zur Spülung von Anlagenteilen mit Spülflüssigkeit, wobei mit der Waschflüssigkeit des Primärkreislaufes (50) eine erste Waschstufe (22) zur Reinigung der Abluft aus der Spritzkabine (80, 130, 140) betrieben ist, und wobei der ersten Waschstufe (22) eine zweite Waschstufe (86) zur Nachbehandlung der Abluft nachgeschaltet ist, **dadurch gekennzeichnet, daß** die zweite Waschstufe (86) aus dem Spülkreislauf (52) gespeist ist, und daß eine Steuereinrichtung (56) vorgesehen ist, die mit dem Primärkreislauf (50) und dem Spülkreislauf zu deren Steuerung gekoppelt ist und die zur Umschaltung zwischen einem Spritzbetrieb der Spritzkabine (80, 130, 140), in dem die erste Waschstufe (22) aus dem Primärkreislauf (50) gespeist ist, und einem Spülbetrieb der Spritzkabine (80, 130, 140) ausgebildet ist, und die zur Zuführung von Spülflüssigkeit aus dem Spülbehälter (44) zumindest zur ersten Waschstufe oder den Rieselflächen bei Umschaltung vom Spritzbetrieb in den Spülbetrieb ausgebildet ist.

2. Spritzkabine nach Anspruch 1, **dadurch gekennzeichnet, daß** der Spülkreislauf (52) einen Teilkreislauf (64, 72) mit Spül-, Nebel- oder Sprüheinrichtungen (70, 79) umfaßt, mittels derer Anlagenteile zusätzlich mit Spülflüssigkeit befeuchtet werden.

3. Spritzkabine nach Anspruch 2, **dadurch gekennzeichnet, daß** der Auffangbehälter (28) des Primärkreislaufes (50) eine Spül-, Nebel- oder Sprüheinrichtung (79) aufweist.

4. Spritzkabine nach Anspruch 3, **dadurch gekennzeichnet, daß** ein Zeitschaltglied oder ein Sensor (78), vorzugsweise ein Feuchtesensor oder ein Niveausensor, im Auffangbehälter (28) vorgesehen ist, um die Spül-, Nebel- oder Sprüheinrichtung (79) zu steuern.

5. Spritzkabine nach einem oder mehreren der vorhergehenden Ansprüche, **dadurch gekennzeichnet, daß** in der Waschstufe (22) eine Spül-, Nebel- oder Sprüheinrichtung (70) zur Befeuchtung oder Reinigung vorgesehen ist, die aus dem Spülbehälter (44) gespeist ist.

6. Spritzkabine nach einem oder mehreren der vorhergehenden Ansprüche, **dadurch gekennzeichnet, daß** die Steuereinrichtung (56) eine Zeitsteuerung zur Einschaltung und zur Ausschaltung des Spülkreislaufes (52) nach einer bestimmten Zeitspanne oder zur intermittierenden Ein-/Ausschaltung des Spülkreislaufes (52) oder eine Einrichtung zur Reduzierung der Pumpleistung aufweist.

7. Spritzkabine nach einem oder mehreren der vorhergehenden Ansprüche, **dadurch gekennzeichnet, daß** eine Membranfiltrationseinrichtung (102) vorgesehen ist, die aus dem Auffangbehälter (28) des Primärkreislaufes (50) gespeist ist, daß das Retentat in den Auffangbehälter (28) zurückgeführt ist, und daß das Permeat dem Spülbehälter (44) zugeführt ist.

8. Spritzkabine nach Anspruch 7, **dadurch gekennzeichnet, daß** der Spülbehälter (44) einen Überlauf (112) aufweist, aus dem Flüssigkeit in den Auffangbehälter (28) zurückgeführt ist.

9. Verfahren zum Betreiben eines Spritzkabine, insbesondere für wasserverdünnbare Beschichtungsstoffe, die nach Trocknung oder Teiltrocknung bei Raumtemperatur durch Wasser nicht mehr in einen weitgehend homogenen Zustand reemulgierbar sind, bei dem die Begrenzungsflächen der Spritzkabine (80, 130, 140) während eines Spritzbetriebes der Spritzkabine (80, 130, 140) zumindest teilweise mit Waschflüssigkeit aus einem Primärkreislauf (50) berieselt werden, und bei dem Anlagenteile mit Spülflüssigkeit aus einem Spülkreislauf (52) gespült werden, wobei mit der Waschflüssigkeit aus dem Primärkreislauf (50) die Abluft aus der Spritzkabine in einer ersten Waschstufe (22) gewaschen wird, und wobei die Abluft in einer zweiten Waschstufe (86) nachbehandelt wird, **dadurch gekennzeichnet, daß** die zweite Waschstufe (86) mit Spülflüssigkeit aus dem Spülkreislauf (52) betrieben wird und daß bei Abschaltung oder Unterbrechung des Spritzbetriebes die Spülflüssigkeit aus dem Spülkreislauf (52) zumindest in die erste Waschstufe (22) der Spritzkabine (80, 130, 140) umgeleitet wird.

10. Verfahren nach Anspruch 9, **dadurch gekennzeichnet, daß** die Spülflüssigkeit in einem Spülkreislauf (52) geführt wird, der nach einer vorbestimmten Zeitspanne wieder ausgeschaltet oder intermittierend betrieben wird oder mit reduzierter Förderleistung betrieben wird.

11. Verfahren nach Anspruch 9 oder 10, **dadurch gekennzeichnet, daß** aus dem Spülkreislauf (52) während des Spritzbetriebes zusätzlich Anlagenteile mit Waschflüssigkeit berieselt oder besprüht werden, um ein Ansetzen von Beschichtungsstoff zu vermeiden.

12. Verfahren nach einem oder mehreren der Ansprüche 9 bis 11, **dadurch gekennzeichnet, daß** die Waschflüssigkeit aus dem Auffangbehälter (28) des Primärkreislaufes (50) einer Membranfiltration unterzogen wird, wobei das Rententat wieder in den Auffangbehälter (28) geleitet wird und das Permeat in den Spülkreislauf (52) geführt wird.

13. Verfahren nach einem oder mehreren der Ansprüche 9 bis 12, **dadurch gekennzeichnet, daß** Waschflüssigkeit aus dem Primärkreislauf (50) aufkonzentriert und einer Wiederverwendung zugeführt wird.

14. Verfahren nach Anspruch 9, **dadurch gekennzeichnet, daß** nach Abschaltung des Primärkreislaufes (50) der Auffangbehälter (28) entleert wird und anschließend mit Spülflüssigkeit aus dem Spülbehälter (44) befüllt wird, aus dem dann die Flüssigkeit in die Spritzkabine (150) gepumpt wird, um Anlagenteile zu befeuchten oder zu reinigen.

## Claims

1. Spraying chamber, in particular for water dilutable coating materials, not suitable for being emulsified into a largely homogeneous state by using water at room temperature, after drying or partial drying, comprising limiting surfaces being at least partially configured as trickling surfaces (17, 18, 19) that can be trickled with washing liquid from a primary loop (50) being fed from a receiving vessel (28), further comprising a rinsing loop (52) for rinsing device parts with rinsing liquid and being fed from a rinsing vessel (44), wherein a first washing stage (22) is operated with the washing liquid from the primary loop (50) for cleaning exhaust air from the spraying chamber (80, 130, 140), and wherein the first washing stage (22) is followed by a second washing stage (86) for subsequent processing of the exhaust air, **characterized in that** the second washing stage (86) is fed from the rinsing loop (52), and **in that** a control device (56) is provided that is coupled to the primary loop (50) and to the rinsing loop for controlling same and which is adapted for switching between a spraying operation of the spraying chamber (80, 130, 140), within which the first washing stage (22) is fed from the primary loop (50), and between a rinsing operation of the spraying chamber (80, 130, 140), and which is adapted for feeding rinsing liquid from the rinsing vessel (44) at least to the first washing stage or to the trickling surfaces when switching from spraying operation to rinsing operation.

2. Spraying chamber of claim 1, **characterized in that** the rinsing loop (52) comprises a partial loop (64, 72) having rinsing, fog or spraying devices (70, 79) for moistening device parts additionally with rinsing liquid.

3. Spraying chamber of claim 2, **characterized in that** the receiving vessel (28) of the primary loop (50) comprises a rinsing, fog or spraying device (79).

4. Spraying chamber of claim 3, **characterized in that** a timing element or a sensor (78), preferably a moisture sensor or a level sensor, is provided in the receiving vessel (28) for controlling the rinsing, fog or spraying device (79).

5. Spraying chamber of one or more of the preceding claims, **characterized in that** a rinsing, fog or spraying device (70) is arranged in the washing stage (22), being fed from the rinsing vessels (44).

6. Spraying chamber of one or more of the preceding claims, **characterized in that** the control device (56) comprises a timing control for activating and for deactivating the rinsing loop (52) after a certain elapsed time or for intermittingly activating/deactivating the rinsing loop (52) or a device for reducing the pumping power.

7. Spraying chamber of one or more of the preceding claims, **characterized in that** a membrane filtration device (102) is provided which is fed from the receiving vessel (28) of the primary loop (50), and **in that** the residue is returned into the receiving vessel (28), and **in that** the permeate is fed into the rinsing vessel (44).

8. Spraying chamber of claim 7, **characterized in that** the rinsing vessel (44) comprises an overflow (112) from which liquid is returned into the receiving vessel (28).

9. Process for operating a spraying chamber, in particular for water dilutable coating materials not suitable for being emulsified into a largely homogeneous state by using water at room temperature, after drying or partial drying, wherein the limiting surfaces of the spraying chamber (80, 130, 140) are at least partially trickled with washing liquid from a primary loop (50) during a spraying operation, and wherein device parts are rinsed with rinsing liquid from a rinsing loop (52), wherein the exhaust air from the spraying chamber is washed in a first washing stage (22) using washing liquid from the primary loop (50), and wherein the exhaust air is subsequently processed in a second washing stage (86), **characterized in that** the second washing stage (86) is operated with rinsing liquid from the rinsing loop (52), and **in that** the rinsing liquid from the rinsing loop (52) is at least redirected into the first washing stage (22) of the spraying chamber (80, 130, 140) when deactivating or interrupting the spraying operation.

10. Process of claim 9, **characterized in that** the rinsing liquid is guided in a rinsing loop (52) which is deactivated after a predetermined elapsed time or is operated intermittingly or with reduced power.

11. Process of claim 9 or 10, **characterized in that** device parts are additionally trickled or sprayed with washing liquid from the rinsing loop (52) during spraying operation, for avoiding a deposition of coating material.

12. Process of one or more of claims 9 to 11, **characterized in that** the rinsing liquid from the receiving vessel (28) of the primary loop (50) is subjected to a membrane filtration, wherein the residue is fed back into the receiving vessel (28), and wherein the permeate is guided into the rinsing loop (52).

13. Process of one or more of claims 9 to 12, **characterized in that** the rinsing liquid from the primary loop (50) is concentrated and forwarded for recycling.

14. Process of claim 9, **characterized in that** the primary loop (50) of the receiving vessel (28) is emptied upon deactivation and subsequently filled with rinsing liquid from the rinsing vessel (44), out of which thereafter the liquid is pumped into the spray booth (150) for moisturizing or cleaning device parts.

## Revendications

1. Cabine de pulvérisation, en particulier pour substances de revêtement diluables à l'eau ne pouvant, après séchage total ou partiel à température ambiante, être réémulsionnées à l'eau pour donner un produit largement homogène, avec des surfaces de délimitation agencées au moins en partie sous la forme de surfaces de ruissellement (17, 18, 19) aptes à être aspergées d'un liquide de lavage par un circuit primaire (50) alimenté depuis un récipient collecteur (28), avec un circuit de rinçage (52) alimenté depuis le récipient de rinçage (44) pour rincer les composants de l'installation avec un liquide de rinçage, une première étape de lavage (22) étant effectuée au moyen du liquide de lavage du circuit primaire (50) pour laver l'air extrait de la cabine de pulvérisation (80, 130, 140), ladite première étape de lavage (22) étant suivie d'une seconde étape de lavage (86) pour le traitement ultérieur de l'air extrait, **caractérisée en ce que** la deuxième étape de lavage (86) est alimentée par le circuit de rinçage (52) et **en ce qu'**il est prévu un dispositif de commande (56) qui est couplé à et commande le circuit primaire (50) et le circuit de rinçage et qui est conçu pour commuter entre un fonctionnement en mode pulvérisation de la cabine de pulvérisation (80, 130, 140), dans lequel la première étape de lavage (22) est alimentée par le circuit primaire (50), et un fonctionnement en mode rinçage de la cabine de pulvérisation (80, 130, 140), ledit dispositif de commande étant conçu pour alimenter en liquide de rinçage depuis le récipient de rinçage (44) au moins la première étape de lavage ou les surfaces de ruissellement lors de la commutation du mode pulvérisation au mode rinçage.

2. Cabine de pulvérisation selon la revendication 1, **caractérisée en ce que** le circuit de rinçage (52) comporte un circuit partiel (64, 72) avec des dispositifs de rinçage, nébulisation ou pulvérisation (70, 79), permettant, en complément, d'humidifier les composants de l'installation avec du liquide de rinçage.

3. Cabine de pulvérisation selon la revendication 2, **caractérisée en ce que** le récipient collecteur (28) du circuit primaire (50) comporte un dispositif de rinçage, nébulisation ou pulvérisation (79).

4. Cabine de pulvérisation selon la revendication 3, **caractérisée en ce qu'**un élément de temporisation ou un capteur (78), de préférence un capteur d'humidité ou un capteur de niveau est prévu dans le récipient collecteur (28) pour commander le dispositif de rinçage, nébulisation ou pulvérisation (79).

5. Cabine de pulvérisation selon l'une au moins des revendications précédentes, **caractérisée en ce qu'**il est prévu, dans l'étape de lavage (22) et à des fins d'humidification ou de nettoyage, un dispositif de rinçage, nébulisation ou pulvérisation (70) alimenté par le récipient de rinçage (44).

6. Cabine de pulvérisation selon l'une au moins des revendications précédentes, **caractérisée en ce que** le dispositif de commande (56) comporte une commande temporisée pour l'activation et la désactivation du circuit de rinçage (52) après un laps de temps déterminé ou pour l'activation et la désactivation par intermittence du circuit de rinçage (52), ou bien un dispositif destiné à réduire la puissance de pompage.

7. Cabine de pulvérisation selon l'une ou plusieurs des revendications précédentes, **caractérisée en ce qu'**il est prévu un dispositif de filtration à travers une membrane (102), qui est alimenté depuis le récipient collecteur (28) du circuit primaire (50), **en ce que** le rétentat est renvoyé dans le récipient collecteur (28) et **en ce que** le perméat est renvoyé au récipient de rinçage (44).

8. Cabine de pulvérisation selon la revendication 7, **caractérisée en ce que** le récipient de rinçage (44) comporte un trop-plein (112), depuis lequel du liquide est renvoyé dans le récipient collecteur (28).

9. Procédé d'exploitation d'une cabine de pulvérisation, en particulier pour substances de revêtement diluables dans l'eau ne pouvant, après séchage total ou partiel à température ambiante, être réémulsionnées à l'eau pour donner un produit largement homogène, dans lequel, pendant un fonctionnement en mode pulvérisation de la cabine de pulvérisation (80, 130, 140), les surfaces de délimitation de la cabine de pulvérisation (80, 130, 140) sont aspergées au moins partiellement de liquide de lavage provenant d'un circuit primaire (50), et dans lequel les composants de l'installation sont rincés avec le liquide de rinçage provenant du circuit de rinçage (52), l'air extrait de la cabine de pulvérisation étant lavé avec le liquide de lavage du circuit primaire (50) lors d'une première étape de lavage (22) et étant soumis ultérieurement à une seconde étape de lavage (86), **caractérisé en ce que** la seconde étape de lavage (86) est effectuée avec le liquide de rinçage du circuit de rinçage (52) et **en ce qu'**en cas de désactivation ou d'interruption de la pulvérisation, le liquide de rinçage est dévié du circuit de rinçage (52) au moins vers la première étape de lavage (22) de la cabine de pulvérisation (80, 130, 140).

10. Procédé selon la revendication 9, **caractérisé en ce que** le liquide de rinçage est guidé dans un circuit de rinçage (52) qui, après écoulement d'un laps de temps prédéterminé, est de nouveau désactivé ou activé par intermittence ou encore avec un débit réduit.

11. Procédé selon la revendication 9 ou 10, **caractérisé en ce que** pendant le fonctionnement en mode pulvérisation, des composants de l'installation sont également aspergés ou arrosés de liquide de lavage provenant du circuit de rinçage (52), pour éviter le dépôt de substance de revêtement.

12. Procédé selon l'une au moins des revendications 9 à 11, **caractérisé en ce que** le liquide de lavage prélevé du récipient collecteur (28) du circuit primaire (50) est filtré à travers une membrane, le rétentat étant reconduit vers le récipient collecteur tandis que le perméat est reconduit dans le circuit de rinçage (52).

13. Procédé selon l'une au moins des revendications 9 à 12, **caractérisé en ce que** le liquide de lavage issu du circuit primaire (50) est concentré et recyclé en vue d'une nouvelle utilisation.

14. Procédé selon la revendication 9, **caractérisé en ce que**, après désactivation du circuit primaire (50), le récipient collecteur (28) est vidé puis rempli de liquide de rinçage issu du récipient de rinçage (44), ledit liquide de rinçage étant ensuite pompé vers la cabine de pulvérisation (150) pour humidifier ou nettoyer les composants de l'installation.
